# EUROPEAN PATENT APPLICATION

(11) **EP 4 668 721 A1**
(43) Date of publication of application: **24.12.2025**
(21) Application number: 24832226.5
(22) Date of filing: 03.05.2024
(51) Int. Cl.: H04M 1/02

(54) **ELECTRONIC DEVICE COMPRISING LATTICE PLATE SUPPORTING FLEXIBLE DISPLAY**

(30) Priority: 30.06.2023 KR 20230085207; 03.08.2023 KR 20230101572
(71) Applicant: Samsung Electronics Co., Ltd., Suwon-si, Gyeonggi-do 16677 (KR)
(72) Inventor: SONG, Hyundo, Suwon-si, Gyeonggi-do 16677 (KR)
(74) Representative: HGF
(86) International application number: PCT/KR2024/006048
(87) International publication number: WO 2025/005442

(57) **Abstract**

An electronic device may comprise: a first housing; a second housing to which the first housing is movably connected; and a display module supported by at least one of the first housing and the second housing and having a display area changed by relative movement of the first housing with respect to the second housing. The display module may comprise: a display panel; a support plate having one surface connected to the rear surface of the display panel; and a support structure comprising a plurality of lattice plates disposed on the other surface of the support plate opposite to the one surface of the support plate.

## Description

### TECHNICAL FIELD

The disclosure below relates to an electronic device including a lattice plate supporting a flexible display.

### BACKGROUND ART

Electronic devices are gradually becoming slimmer and are being developed in various ways to strengthen design aspects and differentiate functional elements at the same time. Electronic devices are being transformed from a uniform rectangular shape into a variety of shapes. Electronic devices may include a deformable display (e.g., a rollable display or a foldable display) to be conveniently carried and to use a large-screen display. Electronic devices are being developed that include structures that prevent or reduce damage to a display or deterioration of screen quality during a process of deforming (e.g., reducing or expanding) the display.

However, the foregoing should not be construed as having been acknowledged by the applicant as a prior art to the description set forth in the disclosure, but should be construed only as a related art to the invention described herein.

### DISCLOSURE OF THE INVENTION

### TECHNICAL SOLUTIONS

In an embodiment, an electronic device may include a first housing, a second housing, to which the first housing is movably connected, and a display module which is supported by at least one of the first housing and the second housing, and has a display area that changes by a relative movement of the first housing with respect to the second housing. The display module may include a display panel, a support plate having one surface connected to a rear surface of the display panel, and a support structure including a plurality of lattice plates disposed on the other surface of the support plate opposite to the one surface of the support plate.

In an embodiment, an electronic device may include a first housing, a second housing, to which the first housing is connected to be inserted and withdrawn, a guide rail connected to the second housing, and a display module which is supported by at least one of the first housing and the second housing, and has a display area that changes by a relative movement of the first housing with respect to the second housing. The display module may include a display panel, a support plate disposed on a rear surface of the display panel, a support structure including a plurality of lattice plates disposed on the support plate to be opposite to the display panel, an end bar connected to an end portion of the support plate and movably connected to the guide rail, and a connecting member which connects the first housing and the end bar, moves the end bar along the guide rail in response to the movement of the first housing relative to the second housing, and expands or reduces the display area of the display.

In an embodiment, an electronic device may include a first housing, a second housing, to which the first housing is connected to be inserted and withdrawn, a pair of guide rails including a first guide portion connected to the first housing and a second guide portion connected to the second housing, and a display module which is supported by at least one of the first housing and the second housing, and has a display area that changes by a relative movement of the first housing with respect to the second housing. The display module may include a display panel, a support plate connected to a rear surface of the display panel, and, as a support structure including a plurality of lattice plates disposed on the support plate to be opposite to the display panel, the support structure including a first lattice plate stacked on the support plate to be opposite to the display panel, a second lattice plate stacked on the first lattice plate to be opposite to the support plate, a third lattice plate stacked on the second lattice plate so as to be opposite to the first lattice plate, a first adhesive layer which is applied between the first lattice plate and the second lattice plate, and bonds the first lattice plate and the second lattice plate, and a second adhesive layer which is applied between the second lattice plate and the third lattice plate, and bonds the second lattice plate and the third lattice plate.

### BRIEF DESCRIPTION OF DRAWINGS

The above and other aspects, features, and advantages of certain embodiments of the present disclosure will be more apparent from the following detailed description, taken in conjunction with the accompanying drawings.
FIG. 1 is a block diagram illustrating an electronic device in a network environment according to an embodiment.
FIG. 2A is a front perspective view illustrating a first state according to various embodiments.
FIG. 2B is a front perspective view illustrating a second state of an electronic device according to various embodiments.
FIG. 2C is a rear perspective view illustrating a first state of an electronic device according to various embodiments.
FIG. 2D is a rear perspective view illustrating a second state of an electronic device according to various embodiments.
FIG. 3 is an exploded perspective view of an electronic device according to various embodiments.
FIG. 4A is a perspective view illustrating an interior of an electronic device according to an embodiment.
FIG. 4B is an enlarged view of an area A of FIG. 4A.
FIG. 4C is an enlarged view of a guide rail and an end bar according to an embodiment.
FIG. 4D is a diagram illustrating a state in which a display panel and a plurality of lattice plates are stacked according to an embodiment.
FIG. 4E is a diagram illustrating a state in which a display panel and a plurality of lattice plates are disassembled according to an embodiment.
FIG. 5A is a diagram illustrating a state before a plurality of lattice plates is expanded and attached according to an embodiment.
FIG. 5B is a diagram illustrating a state in which a plurality of lattice plates is expanded and attached according to an embodiment.
FIG. 5C is a diagram illustrating a state of a pattern formed on each lattice plate in a state in which a plurality of other lattice plates is expanded and attached according to an embodiment.
FIGS. 6A and 6B are diagrams illustrating examples of a pattern formed on a lattice plate according to an embodiment.
FIG. 6C is a diagram illustrating a pattern formed on a surface of a lattice plate according to an embodiment.
FIG. 7 is a diagram illustrating a relationship of arrangement of a plurality of lattice plates according to an embodiment.
FIG. 8 is a diagram illustrating a protrusion formed on a lattice plate according to an embodiment.

### BEST MODE FOR CARRYING OUT THE INVENTION

Hereinafter, embodiments will be described in detail with reference to the accompanying drawings. When describing the embodiments with reference to the accompanying drawings, like reference numerals refer to like elements and a repeated description related thereto will be omitted.

It should be appreciated that various embodiments of the disclosure and the terms used therein are not intended to limit the technical features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C", each of which may include any one of the items listed together in the corresponding one of the phrases, or all possible combinations thereof. Terms such as "first", "second", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments may be implemented as software (e.g., the program 120) including one or more instructions that are stored in a storage medium (e.g., internal memory 136 or external memory 138) that is readable by a machine (e.g., an electronic device). For example, a processor of the machine (e.g., the electronic device) may invoke at least one of the one or more instructions stored in the storage medium, and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiment, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

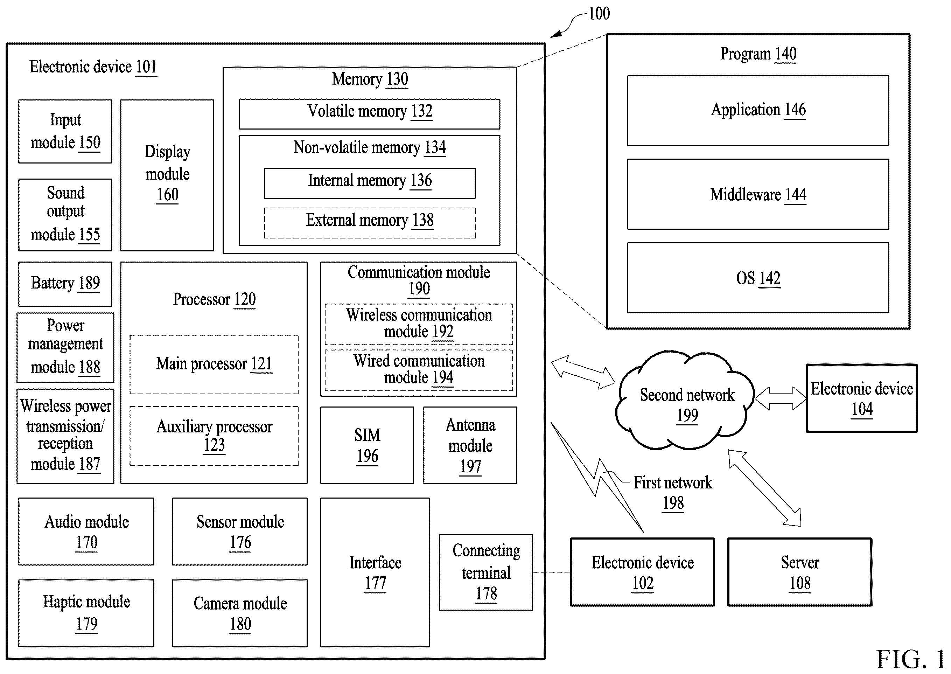

FIG. 1 is a block diagram illustrating an electronic device in a network environment according to embodiments. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the above components may be omitted from the electronic device 101, or one or more other components may be added in the electronic device 101. In some embodiments, some of the components (e.g., the sensor module 176, the camera module 180, or the antenna module 197) may be integrated as a single component (e.g., the display module 160).

The processor 120 may execute, for example, software (e.g., a program 140) to control at least one other component (e.g., a hardware or software component) of the electronic device 101 connected to the processor 120, and may perform various data processing or computation. According to an embodiment, as at least a portion of data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is in an active state (e.g., executing an application). According to an embodiment, the auxiliary processor 123 (e.g., an ISP or a CP) may be implemented as a portion of another component (e.g., the camera module 180 or the communication module 190) that is functionally related to the auxiliary processor 123. According to an embodiment, the auxiliary processor 123 (e.g., an NPU) may include a hardware structure specified for artificial intelligence (AI) model processing. The AI model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The AI model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The AI model may additionally or alternatively include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to an embodiment, the receiver may be implemented separately from the speaker or as a part of the speaker.

The display module 160 may visually provide information to the outside (e.g., a user) of the electronic device 101. The display module 160 may include, for example, a display, a hologram device, or a projector and control circuitry to control a corresponding one of the display, the hologram device, or the projector. According to an embodiment, the display module 160 may include a touch sensor adapted to sense a touch, or a pressure sensor adapted to measure an intensity of a force incurred by the touch.

The audio module 170 may convert a sound into an electric signal or vice versa. According to an embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101, and generate an electric signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., by wire) or wirelessly. According to an embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via his or her tactile sensation or kinesthetic sensation. According to an embodiment, the haptic module 179 may include, for example, a motor, a piezoelectric element, or an electric stimulator.

The camera module 180 may capture a still image and moving images. According to an embodiment, the camera module 180 may include one or more lenses, image sensors, ISPs, or flashes.

The power management module 188 may manage power supplied to the electronic device 101. According to an embodiment, the power management module 188 may be implemented as, for example, at least a part of a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN))). These various types of communication modules may be implemented as a single component (e.g., a single chip), or may be implemented as multiple components (e.g., multiple chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a fourth-generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or power may be transmitted or received between the communication module 190 and the external electronic device via the at least one selected antenna. According to an embodiment, another component (e.g., a radio frequency integrated circuit (RFIC)) other than the radiating element may be additionally formed as a part of the antenna module 197.

According to various embodiments, the antenna module 197 may form a mmWave antenna module. According to an embodiment, the mmWave antenna module may include a PCB, a RFIC disposed on a first surface (e.g., the bottom surface) of the PCB or adjacent to the first surface and capable of supporting a designated high-frequency band (e.g., the mmWave band), and a plurality of antennas (e.g., array antennas) disposed on a second surface (e.g., the top or a side surface) of the PCB, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the external electronic devices 102 and 104 may be a device of a same type as, or a different type from, the electronic device 101. According to an embodiment, all or some of operations to be executed by the electronic device 101 may be executed at one or more external electronic devices (e.g., the external devices 102 and 104, and the server 108). For example, if the electronic device 101 needs to perform a function or a service automatically, or in response to a request from a user or another device, the electronic device 101, instead of, or in addition to, executing the function or the service, may request one or more external electronic devices to perform at least a portion of the function or the service. The one or more external electronic devices receiving the request may perform the at least part of the function or the service requested, or an additional function or an additional service related to the request, and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or MEC. In another embodiment, the external electronic device 104 may include an Internet-of-things (IoT) device. The server 108 may be an intelligent server using machine learning and/or a neural network. according to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to embodiments may be one of various types of electronic devices. The electronic device may include, for example, a portable communication device (e.g., a smartphone), a computer device, a portable multimedia device, a portable medical device, a camera, a wearable device, or a home appliance device. According to an embodiment of the disclosure, the electronic devices are not limited to those described above.

It should be appreciated that embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related components. It is to be understood that a singular form of a noun corresponding to an item may include one or more of the things, unless the relevant context clearly indicates otherwise. As used herein, "A or B", "at least one of A and B", "at least one of A or B", "A, B or C", "at least one of A, B and C", and "at least one of A, B, or C," may include any one of the items listed together in the corresponding one of the phrases, or all possible combinations thereof. Terms such as "1^{st}", "2^{nd}", or "first" or "second" may simply be used to distinguish the component from other components in question, and do not limit the components in other aspects (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., by wire), wirelessly, or via a third element.

As used in connection with embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Embodiments as set forth herein may be implemented as software (e.g., the program 140) including one or more instructions that are stored in a storage medium (e.g., an internal memory 136 or an external memory 138) that is readable by a machine (e.g., the foldable electronic device 101). For example, a processor (e.g., the processor 120) of the machine (e.g., the foldable electronic device 101) may invoke at least one of the one or more instructions stored in the storage medium and execute it. This allows the machine to be operated to perform at least one function according to the at least one instruction invoked. The one or more instructions may include code generated by a compiler or code executable by an interpreter. The machine-readable storage medium may be provided in the form of a non-transitory storage medium. Here, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments disclosed herein may be included and provided in a computer program product. The computer program product may be traded as a product between a seller and a buyer. The computer program product may be distributed in the form of a machine-readable storage medium (e.g., compact disc read-only memory (CD-ROM)), or be distributed (e.g., downloaded or uploaded) online via an application store (e.g., PlayStore^{™}), or between two user devices (e.g., smartphones) directly. If distributed online, at least part of the computer program product may be temporarily generated or at least temporarily stored in the machine-readable storage medium, such as memory of the manufacturer's server, a server of the application store, or a relay server.

According to various embodiment, each component (e.g., a module or a program) of the above-described components may include a single entity or multiple entities, and some of the multiple entities may be separately disposed in different components. According to various embodiments, one or more of the above-described components or operations may be omitted, or one or more other components or operations may be added. Alternatively or additionally, a plurality of components (e.g., modules or programs) may be integrated into a single component. In such a case, according to embodiments, the integrated component may still perform one or more functions of each of the plurality of components in the same or similar manner as they are performed by a corresponding one of the plurality of components before the integration. According to embodiments, operations performed by the module, the program, or another component may be carried out sequentially, in parallel, repeatedly, or heuristically, or one or more of the operations may be executed in a different order or omitted, or one or more other operations may be added.

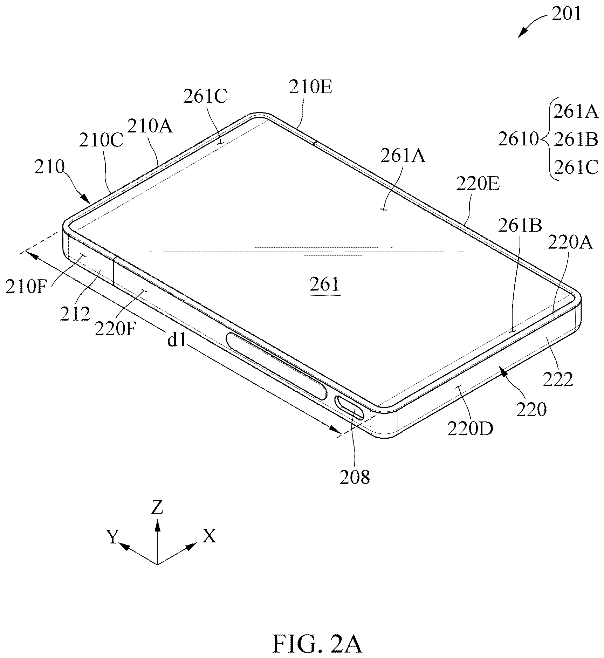

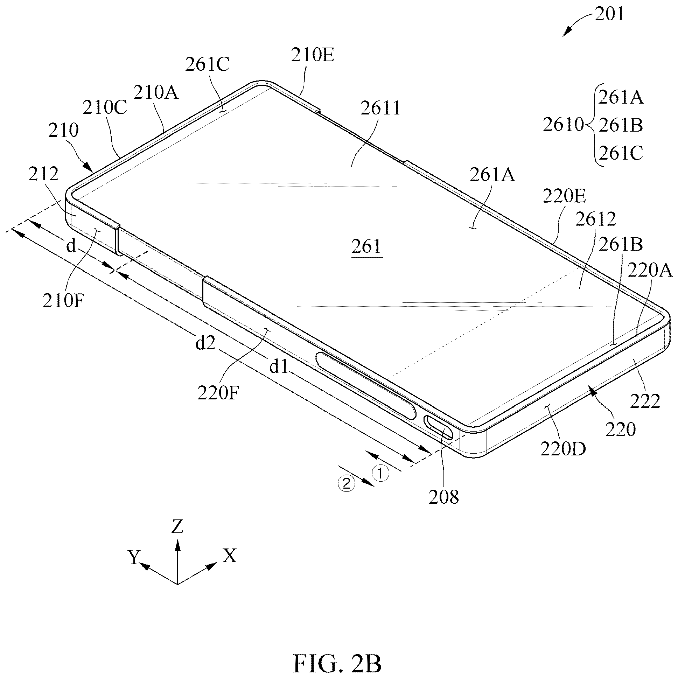

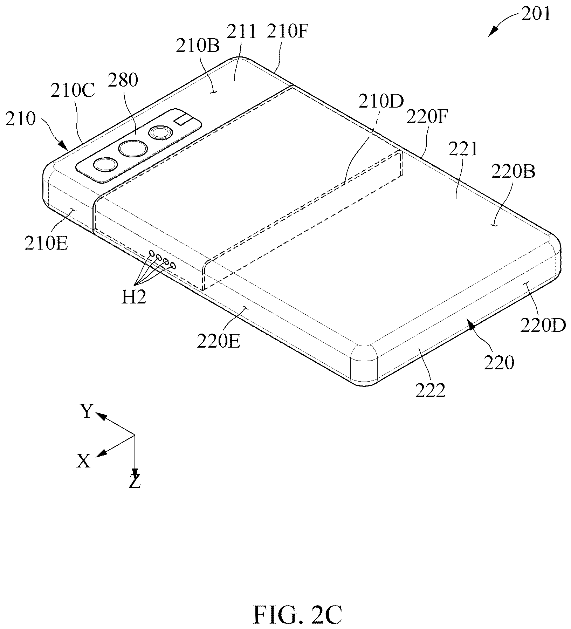

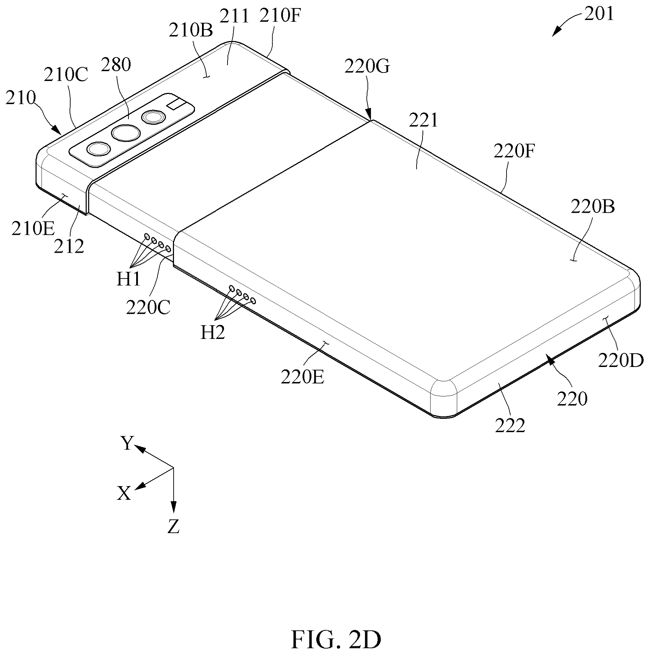

FIGS. 2A and 2B are front perspective views illustrating a first state and a second state of an electronic device, respectively, according to various embodiments, and FIGS. 2C and 2D are rear perspective views illustrating the first state and the second state of the electronic device, respectively, according to various embodiments.

Referring to FIGS. 2A to 2D, an electronic device 201 in various embodiments may include housings 210 and 220 forming an external figure and accommodating components therein. In an embodiment, the housings 210 and 220 may include a first housing 210 and a second housing 220 that are movably coupled to each other. In an embodiment, the first housing 210 may be slidably connected to the second housing 220. For example, the first housing 210 may move relative to the second housing 220 in a first moving direction (direction ①) (e.g., a +Y direction) or may be movably connected to the second housing 220 in a second moving direction (direction ②) (e.g., a -Y direction) that is opposite to the first moving direction (direction ①). Hereinafter, in various embodiments provided herein, the first housing 210 is described as moving relative to the second housing 220, but this is for the description of the relative movement of the first housing 210 and the second housing 220 to each other. Thus, it could also be understood that the second housing 220 moves relative to the first housing 210.

In an embodiment, according to a movement of the first housing 210 relative to the second housing 220, a state of the electronic device 201 may be changed between the first state and the second state. In an embodiment, the electronic device 201 may have a reduced shape in the first state and an expanded shape in the second state. The electronic device 201 may be used in the first state or the second state, or may be used in an intermediate state between the first state and the second state.

In an embodiment, the first housing 210 may include a first surface 210A (e.g., a first front surface), a second surface 210B (e.g., a first rear surface) opposite to the first surface 210A, a first side surface 210C facing a first lateral direction (e.g., the +Y direction) and positioned between the first surface 210A and the second surface 210B, a second side surface 210D facing a second lateral direction (e.g., the -Y direction) opposite to the first lateral direction and positioned between the first surface 210A and the second surface 210B, a third side surface 210E facing a third lateral direction (e.g., an + X direction) crossing the first lateral direction and positioned between the first surface 210A and the second surface 210B, and a fourth side surface 210F facing a fourth lateral direction (e.g., a -X direction) opposite to the third lateral direction and positioned between the first surface 210A and the second surface 210B. In an embodiment, the first housing 210 may include a first plate 211, and a first side frame 212 that substantially extends in a thickness direction (e.g., a Z-axis direction) along an edge of the first plate 211. In an embodiment, the first plate 211 may form the second surface 210B, and the first side frame 212 may form the first side surface 210C, the second side surface 210D, the third side surface 210E, and the fourth side surface 210F. In an embodiment, the first plate 211 and the first side frame 212 may be integrally formed, or may be separately formed to be coupled to each other.

In an embodiment, the second housing 220 may include a third surface 220A (e.g., a second front surface), a fourth surface 220B (e.g., a second rear surface) opposite to the third surface 220A, a fifth side surface 220C facing the first lateral direction (e.g., the +Y direction) and disposed between the third surface 220A and the fourth surface 220B, a sixth side surface 220D facing the second lateral direction (e.g., the -Y direction) opposite to the first lateral direction and disposed between the third surface 220A and the fourth surface 220B, a seventh side surface 220E facing the third lateral direction (e.g., the + X direction) crossing the first lateral direction and disposed between the third surface 220A and the fourth surface 220B, and an eighth side surface 220F facing the fourth lateral direction (e.g., the -X direction) opposite to the third lateral direction and disposed between the third surface 220A and the fourth surface 220B. In an embodiment, the second housing 220 may include a second plate 221 and a second side frame 222 that substantially extends in a thickness direction (e.g., the Z-axis direction) along an edge of the second plate 221. In an embodiment, the second plate 221 may form the fourth surface 220B, and the second side frame 222 may form the fifth side surface 220C, the sixth side surface 220D, the seventh side surface 220E, and the eighth side surface 220F. In an embodiment, the second plate 221 and the second side frame 222 may be integrally formed, or may be separately formed to be coupled to each other.

In an embodiment, the first housing 210 and the second housing 220 may form a front surface (e.g., a surface facing a +Z direction) of the electronic device 201 through the first surface 210A and the third surface 220A and may form a rear surface (a surface facing a - Z direction) of the electronic device 201 through the second surface 210B and the fourth surface 220B. In an embodiment, the second housing 220 may include an open portion 220G in which at least a portion of the fifth side surface 220C is open such that the first housing 210 may be partially movably inserted. However, this is an example, and in another embodiment, the first housing 210 may include an open portion in which at least a portion of the second side surface 210D is open, and the second housing 220 may be partially movably inserted into the first housing 210 through the open portion formed in the second side surface 210D.

In various embodiments, the electronic device 201 may include a display panel 261 configured to display visual information. In an embodiment, the display panel 261 may be exposed to the outside of the electronic device 201 through a display area 2610. In an embodiment, the display area 2610 may include a first area 261A provided parallel to the first surface 210A and the third surface 220A, a second area 261B connected to one end of the first area 261A, and a third area 261C connected to the other end of the first area 261A. The second area 261B and the third area 261C may be provided on opposite sides based on the first area 261A. In an embodiment, each of the second area 261B and the third area 261C may form a flexibly curved surface. In an embodiment, the display panel 261 may display a screen through the display area 2610. The display panel 261 may display one connected screen through the whole display area 2610 and may display a screen through only a portion of the display area 2610. In another embodiment, the display panel 261 may display a plurality of screens partially divided through the display area 2610. For example, the display panel 261 may display one screen through the first area 261A and may display another screen, which is different from the screen displayed through the first area 261A, through the second area 261B and/or the third area 261C.

In an embodiment, the display panel 261 may include a flat portion 2611 forming at least a portion of the display area 2610 and a rolling portion 2612 extending from the flat portion 2611. The rolling portion 2612 may be withdrawn from the inside to the outside of the electronic device 201 or may be inserted from the outside to the inside of the electronic device 201 according to the movement of the first housing 210 relative to the second housing 220. The rolling portion 2612 that is withdrawn to the outside of the electronic device 201 may be exposed to the outside of the electronic device 201 and may form the display area 2610 with the flat portion 2611. The area of the display area 2610 may change according to the degree of withdrawal of the rolling portion 2612.

In an embodiment, the area of the display area 2610 (e.g., the first area 261A, the second area 261B, and the third area 261C) of the display panel 261 may change according to a change in a state of the electronic device 201. In an embodiment, the display area 2610 of the display panel 261 may form a first area (e.g., a minimum area) reduced to the minimum in the first state (e.g., a reduced state or the shape of FIG. 2A) of the electronic device 201 and may form a second area (e.g., a maximum area) expanded to the maximum in the second state (e.g., an expanded state or the shape of FIG. 2C) of the electronic device 201. When the electronic device 201 is between the first state and the second state, the display panel 261 may expand or reduce the area of the display area 2610, corresponding to the state of the electronic device 201. For example, while changing from the first state to the second state, when the first housing 210 moves relative to the second housing 220 in the first moving direction (direction ①) by a certain length d, the length of the display area 2610 that is parallel to the first moving direction (direction ①) changes to a second length d2 increasing by the certain length d from a first length d1 such that the display area 2610 may be expanded. Likewise, while changing from the second state to the first state, when the first housing 210 moves relative to the second housing 220 in the second moving direction (direction ②) by the certain length d, the length of the display area 2610 that is parallel to the second moving direction (direction ②) changes to the first length d1 decreasing by the certain length d from the second length d2 such that the display area 2610 may be reduced. Meanwhile, while the electronic device 201 changes the state between the first state and the second state, the size of the second area 261B and the size of the third area 261C may be substantially constant.

In various embodiments, the electronic device 201 may include at least one of an input module (e.g., the input module 150 of FIG. 1), a sound output module (e.g., the sound output module 155 of FIG. 1), a camera module 280 (e.g., the camera module 180 of FIG. 1), or a connector port 208.

In various embodiments, the input module may receive an input signal according to the manipulation of a user. The input module may be disposed on, for example, the seventh side surface 220E or the eighth side surface 220F of the second housing 220. It should be noted that positions in which the input module is disposed are not limited thereto. For example, the input module may also be disposed in the first housing 210.

In various embodiments, at least one housing between the first housing 210 and the second housing 220 may include a hole for radiating sound generated by the sound output module to the outside. For example, the first housing 210 may include a first hole H1 that is covered by the second housing 220 when the electronic device is in the first state and that is exposed to the outside when the electronic device is in the second state. For example, the second housing 220 may include a second hole H2 formed on at least one of the sixth side surface 220D, the seventh side surface 220E, or the eighth side surface 220F. For example, the first hole H1 and the second hole H2 may be substantially aligned with each other when the electronic device 201 is in the first state.

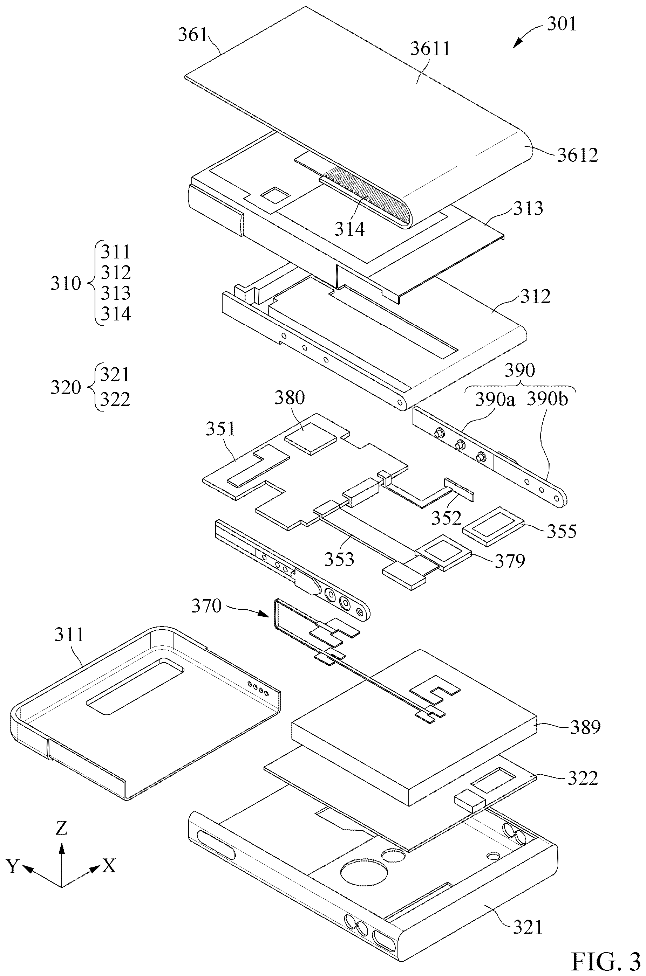

FIG. 3 is an exploded perspective view of an electronic device according to various embodiments.

Referring to FIG. 3, an electronic device 301 according to an embodiment may include a first housing 310 (e.g., the first housing 210 of FIG. 2B), a second housing 320 (e.g., the second housing 220 of FIG. 2B), and a display panel 361 (e.g., the display panel 261 of FIG. 2B).

In an embodiment, the electronic device 301 may include a guide rail 390 configured to move the first housing 310 and the second housing 320 relative to each other. In an embodiment, the guide rail 390 may be disposed in the first housing 310 or the second housing 320. The guide rail 390 may guide the movement of the first housing 310 relative to the second housing 320 or guide the movement of the second housing 320 relative to the first housing 310. The guide rail 390 and a device (e.g., an electric motor or a hydraulic motor) for providing power to the guide rail 390 may be provided separately. In an embodiment, the guide rail 390 may be connected to the first housing 310 and the second housing 320. In an embodiment, at least a portion of the guide rail 390 may be fixed to the second housing 320. In an embodiment, the remaining portion of the guide rail 390 may be connected to the first housing 320 to enable the first housing 310 to move relative to the second housing 320. In an embodiment, the guide rail 390 may be connected to a support structure 314 to be described below. In the process of the first housing 310 moving relative to the second housing 320, the first housing 310 moves through the guide rail 390, and in the process of the first housing 310 moving through the guide rail 390, the support structure 314 connected to the guide rail 390 may also move together. A description of the detailed operation will be provided below.

In an embodiment, the guide rail 390 may include a first guide portion 390a and a second guide portion 390b. In an embodiment, the second guide portion 390b may be fixedly connected to the second housing 320. In an embodiment, the first guide portion 390a may be movably connected to the second guide portion 390b. In an embodiment, the first housing 310 may be connected to the first guide portion 390a. In an embodiment, the first housing 310 connected to the first guide portion 390a may move relative to the second housing 320 as the first guide portion 390a moves relative to the second guide portion 390b.

In an embodiment, the electronic device 301 may include a sound output module 355 (e.g., the sound output module 155 of FIG. 1). In an embodiment, the sound output module 355 may be positioned in the first housing 310 or the second housing 320.

In an embodiment, the electronic device 301 may include a haptic module 379 (e.g., the haptic module 179 of FIG. 1). The haptic module 379 may include, for example, a vibrator configured to generate vibrations. In an embodiment, the haptic module 379 may be positioned in the second housing 320. In some embodiments, the haptic module 379 may be disposed adjacent to the sound output module 355. In an embodiment, the haptic module 379 may also be disposed in the first housing 310.

In an embodiment, the electronic device 301 may include a camera module 380 (e.g., the camera module 180 of FIG. 1). The camera module 380 may include at least one camera to obtain an image of one direction (e.g., the +Z direction) or another direction (e.g., the -Z direction) of the electronic device 301.

In an embodiment, the electronic device 301 may include a battery 389 (e.g., the battery 189 of FIG. 1). In an embodiment, the battery 389 may be disposed in the second housing 320. In an embodiment, the battery 389 may be disposed in the first housing 310.

In an embodiment, the electronic device 301 may include a first PCB 351, a second PCB 352, and a third PCB 353. The first PCB 351, the second PCB 352, and the third PCB 353 may include a plurality of metal layers, and a plurality of dielectrics each positioned between a pair of adjacent metal layers. In an embodiment, the first PCB 351 may be disposed in the first housing 310. The first PCB 351 may include a first electronic component (e.g., the power management module 188 of FIG. 1). The second PCB 352 may be disposed in the first housing 310. The second PCB 352 may be electrically connected, for example, to the guide rail 390. The third PCB 353 may be positioned in the second housing 320. The third PCB 353 may be electrically connected, for example, to the haptic module 379.

In an embodiment, the first housing 310 may include a first cover 311, a first plate 312, and a second plate 313. The second housing 320 may include a second cover 321 and a third plate 322. The first cover 311 may at least partially surround the sound output module 355, the camera module 380, and the haptic module 379. The first plate 312 may at least partially accommodate electronic components (e.g., the guide rail 390, the sound output module 355, the camera module 380, the first PCB 351, the second PCB 352, the third PCB 353, the haptic module 379, and other electronic components). The second plate 313 may be positioned between the first plate 312 and the display panel 361 to support the guide rail 390 and the display panel 361.

In an embodiment, the support structure 314 may prevent or reduce damage to the display panel 361 by supporting the display panel 361 during the process of the display panel 361 being flexibly bent. In an embodiment, the support structure 314 may include a plurality of lattice plates that are formed flexibly. The plurality of lattice plates will be described below.

In an embodiment, the electronic device 301 may include a connecting member 370 connecting the first housing 310 and the support structure 314. In an embodiment, one end portion of the connecting member 370 may be connected to the first housing 310 and the other end portion thereof may be connected to the support structure 314. In an embodiment, the connecting member 370 may connect the first housing 310 and the support structure 314 along a height direction of the housing (e.g., the Z-axis direction of FIG. 3).

In an embodiment, since a total length of the connecting member 370 is the same, when the first housing 310 moves in a direction away from the second housing (e.g., the +Y-axis direction of FIG. 3), the support structure 314 may move in a direction opposite to the movement direction of the first housing (e.g., the -Y-axis direction of FIG. 3), and a display area (e.g., the display area 2610 of FIG. 2A) of the display panel 361 supported by the support structure 314 may be expanded. When the first housing 310 moves in a direction closer to the second housing 320 (e.g., the -Y-axis direction of FIG. 3), the support structure 314 may move in a direction opposite to the movement direction of the first housing 310 (e.g., the +Y-axis direction of FIG. 3), and the display area of the display panel 361 may be reduced.

In an embodiment, the second cover 321 may at least partially surround the first cover 311 and be coupled to the first cover 311 such that the first cover 311 may slide relative to the second cover 321. The second cover 321 may expose at least some (e.g., the camera module 380) of the electronic components to the outside of the electronic device 301. The third plate 322 may be disposed inside the second cover 321.

Meanwhile, the structures of the first housing 310 and the second housing 320 described herein are not limited to the shown embodiments, and there may be various shapes of structures.

In an embodiment, the electronic device 301 may include at least one antenna (not shown). For example, the at least one antenna may wirelessly communicate with an external electronic device (e.g., the electronic device 104 of FIG. 1), or may wirelessly transmit and receive power required for charging. According to an embodiment, the antenna may include a legacy antenna, a mmWave antenna, a near field communication (NFC) antenna, a wireless charging antenna, and/or a magnetic secure transmission (MST) antenna. In an embodiment, the first housing 310 and the second housing 320 may include a conductive portion of which at least a portion is formed of metal to form an antenna structure that performs radiator functions.

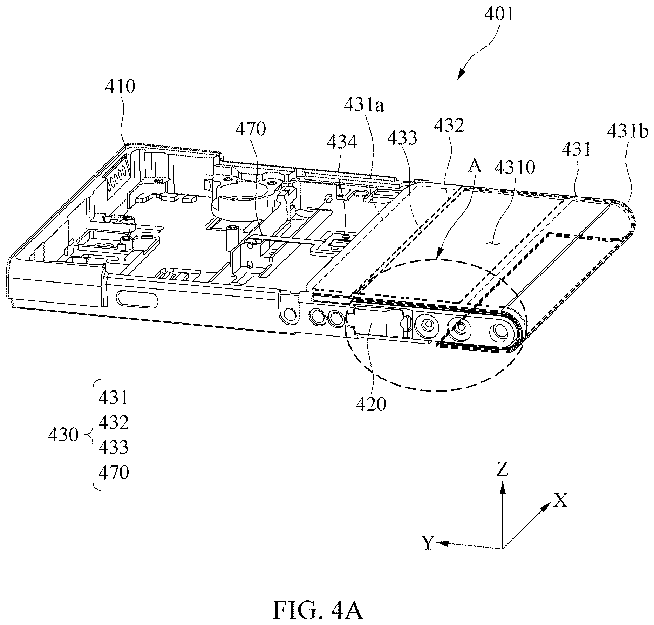

In FIG. 4A and other following drawings, illustrated is a spatial coordinate system defined by the X-axis, the Y-axis, and the Z-axis that are orthogonal to each other. The X-axis may represent the width direction of an electronic device, the Y-axis may represent the longitudinal direction of the electronic device, and the Z-axis may represent the height (or thickness) direction of the electronic device.

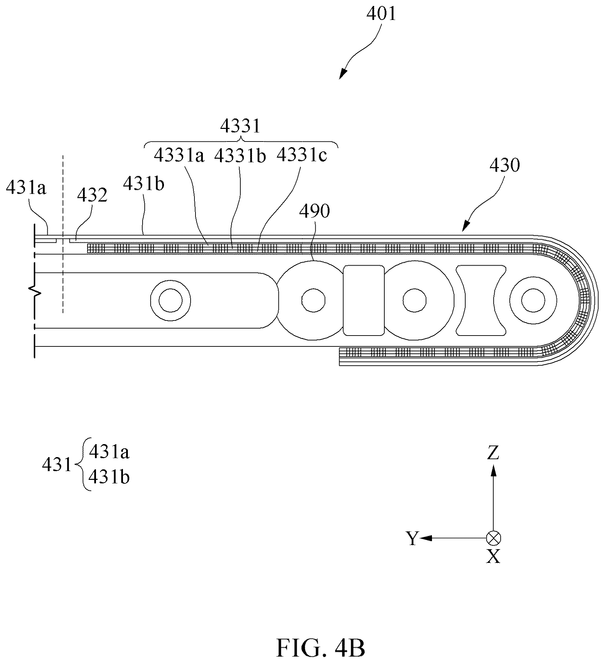

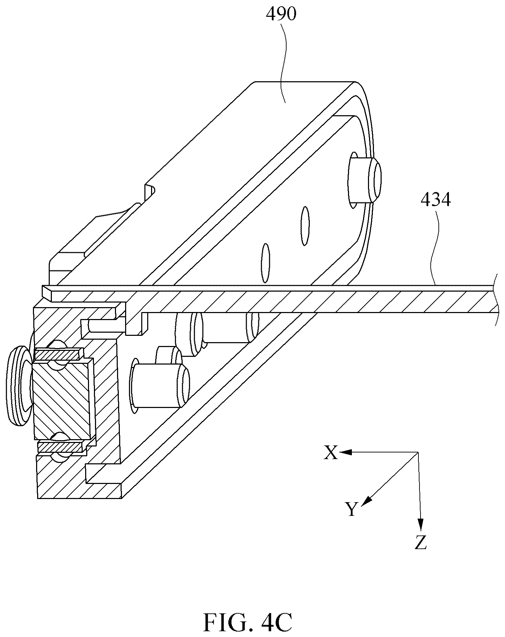

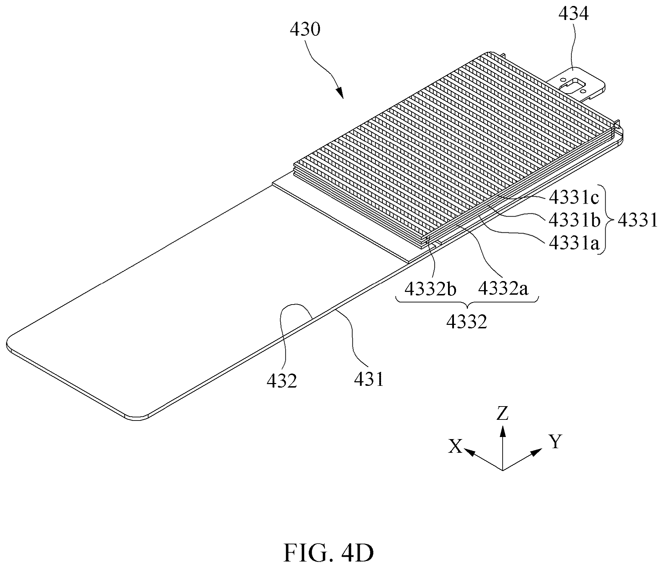

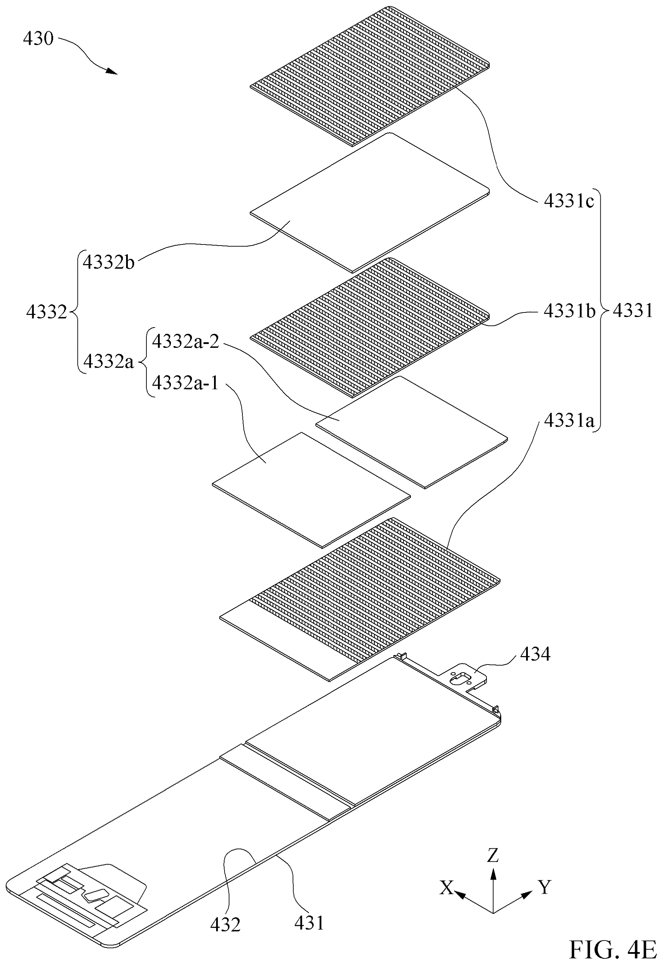

FIG. 4A is a perspective view illustrating an interior of an electronic device according to an embodiment, FIG. 4B is an enlarged view of an area A of FIG. 4A, FIG. 4C is an enlarged view of a guide rail and an end bar according to an embodiment, FIG. 4D is a diagram illustrating a state in which a display panel and a plurality of lattice plates are stacked according to an embodiment, and FIG. 4E is a diagram illustrating a state in which a display panel and a plurality of lattice plates are disassembled according to an embodiment.

Referring to FIGS. 4A to 4C , an electronic device 401 (e.g., the electronic device 301 of FIG. 3 ) according to an embodiment may include a pair of housings 410 and 420 including a first housing 410 (e.g., the first housing 310 of FIG. 3 ) and a second housing 420 (e.g., the second housing 320 of FIG. 3 ), and a display module 430 (e.g., the display module 160 of FIG. 1 ) having a display area 4310 (e.g., the display area 2610 of FIG. 2A ) that changes by a relative movement of the first housing 410 with respect to the second housing 420.

In an embodiment, the pair of housings 410 and 420 may include the first housing 410 and the second housing 420. In an embodiment, the first housing 410 may be movably connected to the second housing 420. For example, the first housing 410 may be connected to be inserted into and withdrawn from the second housing 420 through a guide rail 490 (e.g., the guide rail 390 of FIG. 3). In an embodiment, the first housing 410 and the second housing 420 may be connected to a first guide portion (e.g., the first guide portion 390a of FIG. 3) and a second guide portion (e.g., the second guide portion 390b of FIG. 3) of the guide rail 490, respectively, and the first housing 410 may move relative to the second housing 420 according to the movement of the first guide portion that is translationally movable relative to the second guide portion. In an embodiment, at least a portion of the first housing 410 may support a portion of a display panel 431 (e.g., display panel 361 of FIG. 3) to be described below.

In an embodiment, the display module 430 may visually expose a screen to the outside through the display panel 431. In an embodiment, the display panel 431 may be supported by at least one of the first housing 410 and the second housing 420. In the following description, it is assumed that the display panel 431 is supported by the first housing 410. However, the display panel 431 may also be supported by the second housing 420. In an embodiment, the display module 430 may have the display area 4310 that changes by the relative movement of the first housing 410 with respect to the second housing 420.

In an embodiment, the display module 430 may include the display panel 431, a support plate 432, a support structure 433 (e.g., the support structure 314 of FIG. 3), an end bar 434, and a connecting member 470 (e.g., the connecting member 370 of FIG. 3).

In an embodiment, the display panel 431 may include a screen that is visually exposed to the outside through the display area 4310. In an embodiment, the display panel 431 may include a flexible display (e.g., a foldable display or a rollable display). In an embodiment, the display panel 431 may include a first portion 431a which is supported by the first housing 410 and forms a portion of the display area 4310, and a second portion 431b which extends from the first portion 431a along a movement direction of the first housing 410 (e.g., the +Y-axis direction of FIG. 4A) and at least a portion of which is bent.

In an embodiment, the support plate 432 may be connected to a rear surface of the display panel 431 (e.g., a rear surface of the display panel 431 facing an inner space of the second housing 420 of FIG. 4A). In an embodiment, the support plate 432 may support the second portion 431b of the display panel 431 so as to maintain tension during a process in which the area of the display area 4310 of the display panel 431 is increased or reduced (e.g., a process in which the display panel 431 is bent and then unbent). According to an embodiment, in the process in which the area of the display area 4310 of the display panel 431 is increased or reduced, the support plate 432 may be expanded or reduced in a direction corresponding to the direction in which the area of the display area 4310 of the display panel 431 is expanded or reduced. In an embodiment, the support plate 432 may be a lattice plate having at least a partial area in which a pattern is formed. However, this is merely an example, and the support plate 432 is not implemented only as a lattice plate, and may be implemented as a plate having various shapes that may be expanded or reduced.

In an embodiment, the end bar 434 may be connected to an end portion of the support plate 432. In an embodiment, the end bar 434 may be connected to the connecting member 470 to be described below. In an embodiment, the end bar 434 may move in response to the relative movement of the first housing 410 with respect to the second housing 420 by the connecting member 470. Referring to FIG. 4C, in an embodiment, both end portions of the end bar 434 may be connected to the guide rail 490. In an embodiment, the end bar 434 may move in the inner space of the housing in response to the movement of the first housing 410 through the guide rail 490.

In an embodiment, the connecting member 470 may connect the first housing 410 and the end bar 434. In an embodiment, the connecting member 470 may move the end bar 434 in response to the movement of the first housing 410 while maintaining the total length of the connecting member 470. In an embodiment, the area of the display area 4310 of the display panel 431 may be expanded or reduced as the end bar 434 moves in response to the movement of the first housing 410. For example, when the first housing 410 moves in a direction away from the second housing 420 (e.g., the +Y-axis direction), the display panel 431 may move in a direction parallel to the movement direction of the first housing 410 (e.g., the +Y-axis direction). In an embodiment, when the display panel 431 moves in a direction away from the second housing 420 (e.g., the +Y-axis direction), at least a portion of the display panel 431 that is rolled on a rear surface portion (e.g., a surface facing the -Z-axis direction) of the electronic device 401 may move toward a front surface portion (e.g., a surface facing the +Z-axis direction) of the electronic device 401, thereby expanding the area of the display area 4310 of the display panel 431. In an embodiment, when the first housing 410 moves in a direction closer to the second housing 420 (e.g., the -Y-axis direction), the display panel 431 may move in a direction parallel to the movement direction of the first housing 410 (e.g., the -Y-axis direction). In an embodiment, when the display panel 431 moves in a direction closer to the second housing 420 (e.g., the -Y-axis direction), at least a portion of the display panel 431 that is positioned on the front surface portion of the electronic device 401 may move toward the rear surface portion (e.g., the surface facing the -Z-axis direction) of the electronic device 401, thereby reducing the area of the display area 4310 of the display panel 431.

In an embodiment, the support structure 433 may be disposed on the support plate 432. For example, the support structure 433 may be disposed on the other surface (e.g., a surface facing the -Z-axis direction) of the support plate 432 that is opposite to one surface (e.g., a surface facing the +Z-axis direction) of the support plate 432 on which the display panel 431 is disposed. For example, the support structure 433 may be disposed to overlap the second portion 431b of the display panel 431.

In an embodiment, the support structure 433 may support the display panel 431 in the thickness direction (e.g., the Z-axis direction of FIG. 4A) along the longitudinal direction (e.g., the Y-axis direction of FIG. 4A) of the display panel 431. In an embodiment, the support structure 433 may maintain the position of the display panel 431. In an embodiment, the support structure 433 may include a plurality of lattice plates 4331. However, this is merely an example, and the support structure 433 does not necessarily include only the plurality of lattice plates 4331, and may also include non-patterned plates on which no pattern is formed.

In an embodiment, the support structure 433 may include the lattice plates, and one or more adhesive layers 4332 disposed between the plurality of lattice plates 4331.

In an embodiment, the lattice plate 4331 may be formed of a flexible material to reduce a repulsive force generated during the process in which the area of the display area 4310 of the display panel 431 is expanded or reduced. In an embodiment, the lattice plate 4331 may include a pattern formed on the surface thereof. In an embodiment, the lattice plate 4331 may stably support the display panel 431 during the process in which the display area 4310 of the display panel 431 is expanded or reduced, thereby preventing or reducing the display panel 431 from being bent or curved in a specific direction.

In an embodiment, the lattice plate 4331 of the support structure 433 may be provided in plurality. In an embodiment, the plurality of lattice plates 4331 may be disposed on the rear surface of the display panel 431. For example, the plurality of lattice plates 4331 may be disposed on the support plate 432 that is disposed on the rear surface (e.g., the surface in the -Z-axis direction) of the display panel 431. In an embodiment, the plurality of lattice plates 4331 may support the display panel 431. In an embodiment, each of the plurality of lattice plates 4331 may move the display panel 431 in a direction parallel to the relative movement direction of the first housing 410 in response to the relative movement of the first housing 410 with respect to the second housing 420.

In an embodiment, the plurality of lattice plates 4331 may include, based on the thickness direction (e.g., the Z-axis direction of FIG. 4D) of the plurality of lattice plates 4331, a first lattice plate 4331a stacked on the support plate 432, a second lattice plate 4331b stacked on the first lattice plate 4331a in a direction opposite to the support plate 432 (e.g., the +Z-axis direction of FIG. 4D), and a third lattice plate 4331c stacked on the second lattice plate 4331b in a direction opposite to the first lattice plate 4331a (e.g., the +Z-axis direction of FIG. 4D). Herein, the number of lattice plates 4331 according to an embodiment is three, but the number of lattice plates 4331 is not limited to three and may be one, two, or three or more.

In an embodiment, the adhesive layers 4332 may be applied between each of the lattice plates 4331a, 4331b, and 4331c to bond lattice plates adjacent to each other. In an embodiment, the adhesive layer 4332 may include a first adhesive layer 4332a applied and disposed between the first lattice plate 4331a and the second lattice plate 4331b and bonding the first lattice plate 4331a and the second lattice plate 4331b, and a second adhesive layer 4332b applied and disposed between the second lattice plate 4331b and the third lattice plate 4331c and bonding the second lattice plate 4331b and the third lattice plate 4331c.

In an embodiment, the material of the adhesive layer 4332 may be formed of a pressure sensitive adhesive (PSA) or a general tape material, but this is merely an example and the material of the adhesive layer 4332 is not limited thereto. In an embodiment, the materials of the first adhesive layer 4332a and the second adhesive layer 4332b may be different. In an embodiment, when the adhesive layer 4332 is formed of a general tape material, the adhesive strength may be higher than the case where the adhesive layer 4332 is formed of a PSA material. In an embodiment, when the adhesive layer 4332 is formed of a general tape material, the plurality of lattice plates may integrally operate.

In an embodiment, when the plurality of adhesive layers 4332 is provided, the plurality of adhesive layers 4332 may have different stiffness. For example, the second adhesive layer 4332b may be formed of a material having lower stiffness than the material of the first adhesive layer 4332a. In an embodiment, the first adhesive layer 4332a may be disposed between the first lattice plate 4331a closer to the display panel 431 and the second lattice plate 4331b, the first lattice plate 4331a may be disposed to be closer to the display panel 431 to have a larger radius of rotation than the third lattice plate 4331c, and thus, the repulsive force thereof may be smaller. The first adhesive layer 4332a may have stiffness smaller than the stiffness of the second adhesive layer 4332b for bonding the third lattice plate 4331c having a large radius of rotation to the second lattice plate 4331b.

In an embodiment, one adhesive layer 4332 may be formed integrally or as a separate member. In an embodiment, when one adhesive layer 4332a is formed as a separate member, the one adhesive layer 4332a may include a first adhesive portion 4332a-1 and a second adhesive portion 4332a-2 formed separately from the first adhesive portion 4332a-1. In an embodiment, based on the longitudinal direction (e.g., the Y-axis direction) of the display panel 431, the second adhesive portion 4332a-2 may be disposed in a direction away from the display area 4310 than the first adhesive portion 4332a-1. In an embodiment, since the first adhesive portion 4332a-1 has a degree of bending smaller than that of the second adhesive portion 4332a-2, a smaller repulsive force may be applied by the display panel 431 than the second adhesive portion 4332a-2. In an embodiment, since a smaller repulsive force is applied to the first adhesive portion 4332a-1 than to the second adhesive portion 4332a-2, the second adhesive portion 4332a-2 may have stiffness smaller than that of the first adhesive portion 4332a-1 to provide a constant overall rolling balance. In an embodiment, the second adhesive portion 4332a-2 and the first adhesive portion 4332a-1 are formed of different materials, and the second adhesive portion 4332a-2 may be formed of a material having stiffness smaller than the stiffness of the first adhesive portion 4332a-1.

Hereinafter, an embodiment of attaching the plurality of lattice plates to the support plate connected to the rear surface of the display panel according to an embodiment will be described. In describing the method of attaching the plurality of lattice plates according to an embodiment, the description provided above will be omitted. Additionally, unless otherwise specified, it may be understood that like terms as mentioned above refer to like elements.

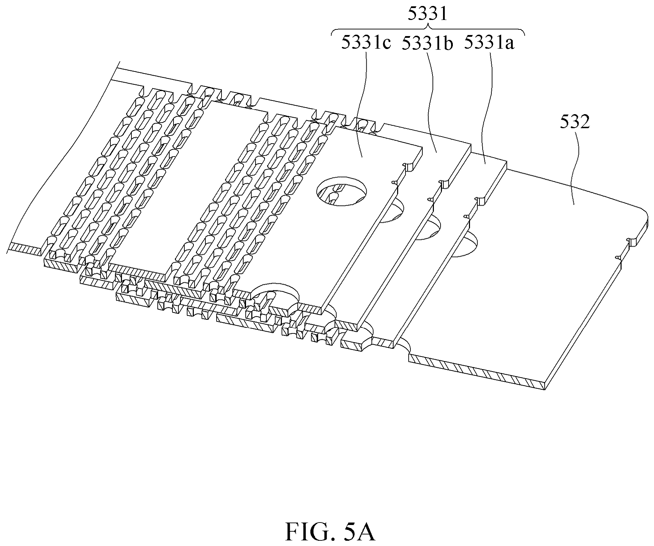

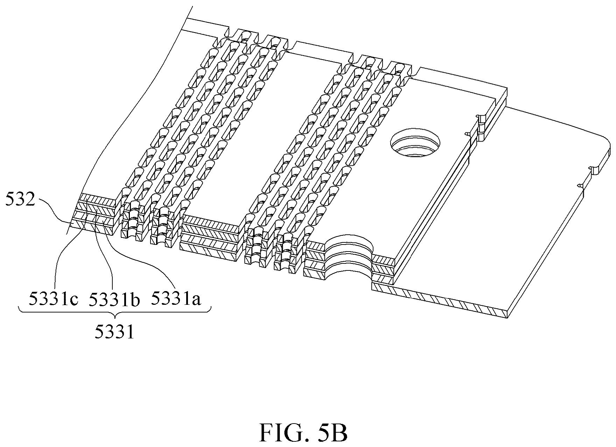

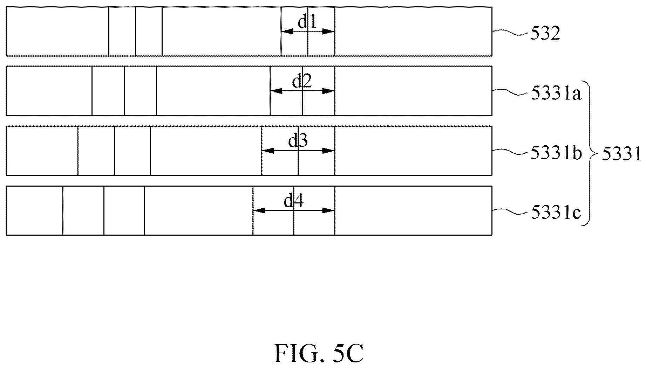

FIG. 5A is a diagram illustrating a state before a plurality of lattice plates is expanded and attached according to an embodiment, FIG. 5B is a diagram illustrating a state in which a plurality of lattice plates is expanded and attached according to an embodiment, and FIG. 5C is a diagram illustrating a state of a pattern formed on each lattice plate in a state in which a plurality of other lattice plates is expanded and attached according to an embodiment.

Referring to FIGS. 5A to 5C, a support plate 532 (e.g., the support plate 432 of FIG. 4B) according to an embodiment may be disposed on a rear surface of a display panel (e.g., the display panel 431 of FIG. 4B), and a plurality of lattice plates 5331 (e.g., the plurality of lattice plates 4331 of FIG. 4D) may be disposed on the support plate 532 in a direction opposite to the display panel. In an embodiment, the plurality of lattice plates 5331 may include a first lattice plate 5331a (e.g., the first lattice plate 4331a of FIG. 4D) stacked on the support plate 532, a second lattice plate 5331b (e.g., the second lattice plate 4331b of FIG. 4D) stacked on the first lattice plate 5331a, and a third lattice plate 5331c (e.g., the third lattice plate 4331c of FIG. 4D) stacked on the second lattice plate 5331b.

In an embodiment, since a pattern is formed on the plurality of lattice plates 5331, each lattice plate 5331 may be expanded along the longitudinal direction (e.g., the Y-axis direction of FIG. 4D) when a tensile force is applied. In an embodiment, the plurality of lattice plates 5331 may be expanded and disposed to correspond to the shape of the display panel. In an embodiment, as the plurality of lattice plates 5331 is disposed closer to the display panel, a radius of rotation may be large and a repulsive force due to the expanded attachment may be small. In an embodiment, as the plurality of lattice plates 5331 is disposed further from the display panel, the radius of rotation may be small and the repulsive force due to the expanded attachment may be large.

In an embodiment, each of the plurality of lattice plates 5331 may have different radius of rotation, causing slip, and a length difference may occur due to the slip. In an embodiment, each of the plurality of lattice plates 5331 may be manufactured by considering the length difference caused by the slip. In an embodiment, the plurality of lattice plates 5331 manufactured by considering the length difference due to the slip may not cause the length difference due to the slip even when being expanded or reduced along the display panel. Referring to FIG. 5B, in an embodiment, each of the plurality of lattice plates 5331 may be expanded and attached along the longitudinal direction of the plurality of lattice plates 5331 by considering the radius of rotation of each of the plurality of lattice plates 5331, and thus, a restoring force may act on the plurality of lattice plates 5331. In an embodiment, the lattice plate 5331 attached closer to the display panel is attached with less expansion than the other lattice plates 5331, and accordingly, a relatively less restoring force may act.

In an embodiment, in each of the plurality of lattice plates 5331 manufactured by considering the slip due to the radius of rotation, as the radius of rotation is small, the lattice plate is further expanded and attached to the support plate 532, and thus, spacing between patterns may be larger than that of other lattice plates 5331. For example, since the first lattice plate 5331a is the lattice plate 5331 disposed to be closest to the support plate 532, the radius of rotation thereof may be larger than those of the other lattice plates 5331b and 5331c. For example, since the third lattice plate 5331c is the lattice plate disposed furthest from the support plate 532, the radius of rotation thereof may be smaller than those of the other lattice plates 5331b and 5331a. The third lattice plate 5331c may be attached to the support plate 532 by being expanded compared to the first lattice plate 5331a and the second lattice plate 5331b.

Referring to FIG. 5C, it may be seen that, when the plurality of lattice plates 5331 is expanded and attached to the rear surface of the display panel, the spacing between the patterns of each lattice plate 5331 is different. For example, spacing d2 between patterns of the first lattice plate 5331a may be larger than spacing d1 between patterns of the support plate 532. Spacing d3 between patterns of the second lattice plate 5331b may be larger than the spacing d2 between the patterns of the first lattice plate 5331a. For example, spacing d4 between patterns of the third lattice plate 5331c may be larger than the spacing d3 between the patterns of the second lattice plate 5331b.

In an embodiment, when the plurality of lattice plates 5331 is expanded and attached, since degrees of expansion of the lattice plates 5331 are different, the patterns with different spacing may be formed on each lattice plate 5331 as shown in FIG. 5C.

In an embodiment, the plurality of lattice plates 5331 is manufactured in a reduced size considering the radius of rotation of each lattice plate 5331 and is expanded by a reduced length and attached. Accordingly, each lattice plate 5331 may evenly apply, to the display panel, a restoring force that may be offset by the repulsive force generated in the process in which the display panel is expanded. In an embodiment, the screen quality degradation that may occur due to the bending of the display panel may be prevented or reduced by the plurality of expanded and attached lattice plates 5331.

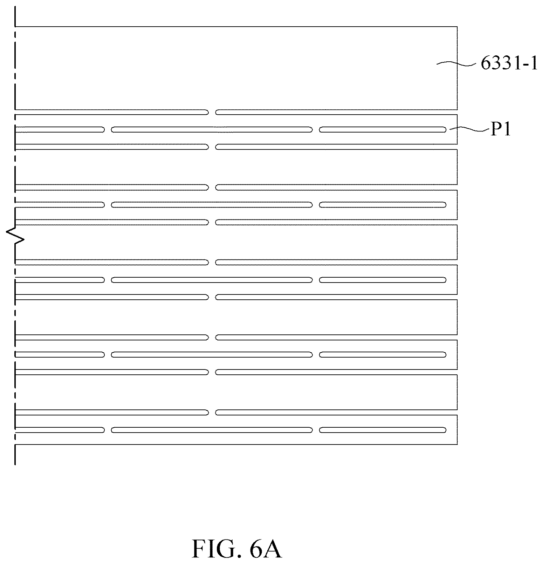

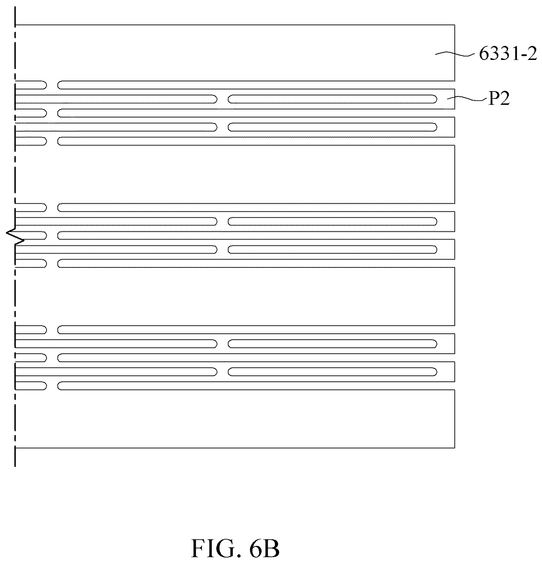

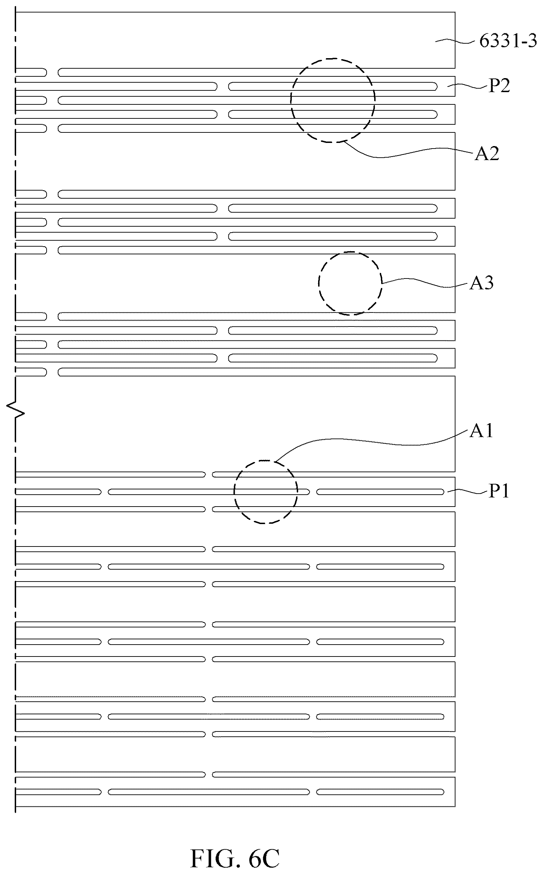

FIGS. 6A and 6B are diagrams illustrating examples of a pattern formed on a lattice plate according to an embodiment, and FIG. 6C is a diagram illustrating a pattern formed on a surface of a lattice plate according to an embodiment.

Referring to FIGS. 6A to 6C, patterns may be formed on lattice plates 6331-1, 6331-2, and 6331-3 according to an embodiment. In an embodiment, during the process in which a display area (e.g., the display area 4310 of FIG. 4A) of a display panel (e.g., the display panel 431 of FIG. 4A) is expanded or reduced, the phenomenon in which the display panel is bent or curved in a specific direction may be prevented or reduced by the patterns formed on the lattice plates 6331-1, 6331-2, and 6331-3.

In an embodiment, a first pattern P1 (e.g., a three-row pattern) or a second pattern P2 (e.g., a five-row pattern) may be formed on at least one lattice plate 6331-1, 6331-2, or 6331-3 among a plurality of lattice plates (e.g., the plurality of lattice plates 4331 of FIG. 4D). However, the first pattern P1 and the second pattern P2 are merely examples, and the first pattern P1 and the second pattern P2 are not limited to the shapes shown in the diagrams and may have patterns with any shape.

In an embodiment, the first pattern P1 may improve the stability of the display panel by providing force distribution that may evenly distribute the repulsive force acting along the longitudinal direction of the display panel when the display area of the display panel is expanded. In an embodiment, the first pattern P1 may provide the stability to the operation of expanding or reducing the display area of the display panel, and improve visual quality by reducing wrinkles that may occur on the display panel.

In an embodiment, the second pattern P2 has more rows than the first pattern P1, thereby further improving the stability of the display panel compared to the first pattern P1. In an embodiment, the second pattern P2 may make the structure of the lattice plates 6331-2 and 6331-3 more rigid so that the expansion or reduction operation of the display area of the display panel may be performed more stably.

In an embodiment, the plurality of lattice plates may have the same pattern or at least one of lattice plates 6331-1, 6331-2, and 6331-3 may have different patterns. For example, the first pattern P1 or the second pattern P2 may be formed on the plurality of lattice plates. In an embodiment, the first pattern P1 may be formed on at least one lattice plate 6331-1, 6331-2, or 6331-3 among the plurality of lattice plates, and the second pattern P2 may be formed on the remaining lattice plate 6331-1, 6331-2, or 6331-3.

In an embodiment, different patterns may appear on a single lattice plate 6331-1, 6331-2, or 6331-3. For example, referring to FIG. 6C, one lattice plate 6331-3 may include a first pattern area A1 in which the first pattern P1 is formed, a second pattern area A2 in which the second pattern P2 different from the first pattern P1 is formed, and a non-pattern area A3 in which no pattern is formed. Such pattern formation may also be applied to a support plate (e.g., the support plate 432 of FIG. 4D).

In an embodiment, the pattern formed on the lattice plate 6331 is not limited to any one shape and/or form, and the pattern may have various shapes and/or forms. For example, the lattice plate 6331 may be formed with a pattern having various shapes and/or forms, such as a honeycomb shape, a grid pattern, a vertical pattern, or a stripe pattern.

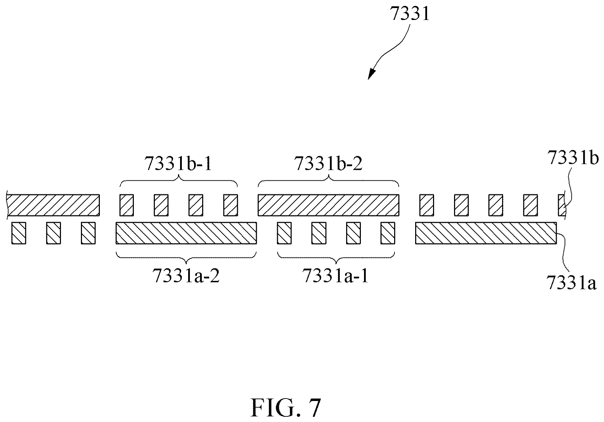

FIG. 7 is a diagram illustrating a relationship of arrangement of a plurality of lattice plates according to an embodiment.

Referring to FIG. 7, a plurality of lattice plates 7331 (e.g., the plurality of lattice plates 4331 of FIG. 4D) may include a first lattice plate 7331a (e.g., the first lattice plate 4331a of FIG. 4D) stacked on a support plate (e.g., the support plate 432 of FIG. 4D), and a second lattice plate 7331b (e.g., the second lattice plate 4331b of FIG. 4D) stacked on the first lattice plate 7331a. In an embodiment, surfaces of the first lattice plate 7331a and the second lattice plate 7331b may have the same pattern or different patterns formed. In an embodiment, when the same pattern is formed on the first lattice plate 7331a and the second lattice plate 7331b, the first lattice plate 7331a and the second lattice plate 7331b may include first areas 7331a-1 and 7331b-1, in which the pattern is formed, and second areas 7331a-2 and 7331b-2, in which the pattern is not formed, respectively. In an embodiment, the first areas 7331a-1 and 7331b-1 and the second areas 7331a-2 and 7331b-2 may be formed alternately along the longitudinal direction of the lattice plate 7331.

In an embodiment, the first lattice plate 7331a and the second lattice plate 7331b may be stacked such that at least a portion of the first area 7331a-1 of the first lattice plate 7331a and at least a portion of the second area 7331b-2 of the second lattice plate 7331b overlap, and at least a portion of the second area 7331a-2 of the first lattice plate 7331a and at least a portion of the first area 7331b-1 of the second lattice plate 7331b overlap. In an embodiment, when surface areas of the lattice plate 7331 on which the patterns are formed overlap each other, noise or deterioration of the display screen quality may occur. In an embodiment, when the first areas 7331a-1 and 7331b-1, in which the patterns are formed, and the second areas 7331a-2 and 7331b-2, in which the patterns are not formed, overlap, the noise generation or the deterioration of the display screen quality may be prevented or reduced.

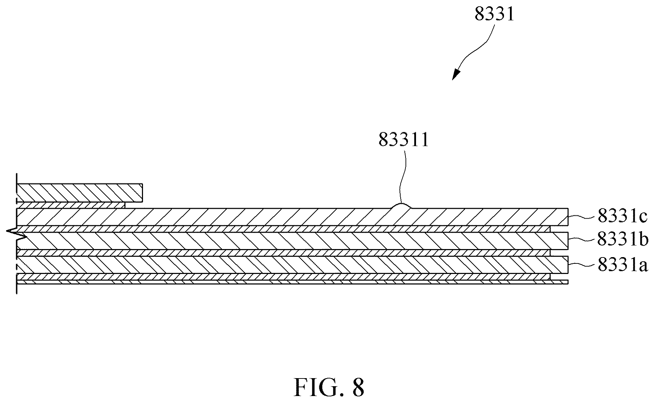

FIG. 8 is a diagram illustrating a protrusion formed on a lattice plate according to an embodiment.

Referring to FIG. 8, at least one lattice plate 8331c among a plurality of lattice plates 8331a, 8331b, and 8331c may have a protrusion 83311 formed to protrude from a surface of the lattice plate. In an embodiment, a plurality of lattice plates 8331 may move in response to a direction in which a display area of a display panel (e.g., the display panel 431 of FIG. 4A) is expanded or reduced, as an end bar (e.g., the end bar 434 of FIG. 4C) connected to a support plate (e.g., the support plate 432 of FIG. 4D) moves along a guide rail (e.g., the guide rail 490 of FIG. 4C). In an embodiment, the plurality of lattice plates 8331 may come into contact with the guide rail at both end portions. In an embodiment, the protrusion 83311 formed on at least one lattice plate 8331c among the plurality of lattice plates 8331 may minimize a contact area between the guide rail and the plurality of lattice plates 8331 so that a movement motion of the plurality of lattice plates 8331 may be performed smoothly. For example, the protrusion 83311 may reduce friction due to the movement of the plurality of lattice plates 8331 by forming a gap that allows the guide rail and the plurality of lattice plates 8331 to be spaced apart from each other by a predetermined distance.

In an embodiment, an electronic device 101; 201; 301; 401 may include a first housing 210; 310; 410; a second housing 220; 320; 420, to which the first housing 210; 310; 410 is movably connected; and a display module 160; 430 which is supported by at least one of the first housing 210; 310; 410 and the second housing 220; 320; 420, and has a display area 2610; 4310 that changes by a relative movement of the first housing 210; 310; 410 with respect to the second housing 220; 320; 420, and the display module 160; 430 may include a display panel 261; 361; 431; a support plate 432; 532 having one surface connected to a rear surface of the display panel 261; 361; 431; and a support structure 314; 433 including a plurality of lattice plates 4331; 5331; 7331; 8331 disposed on the other surface of the support plate 432; 532 opposite to the one surface of the support plate 432; 532.

In an embodiment, the display panel 261; 361; 431 may include a first portion 431a which is supported by the first housing 210; 310; 410 and forms a portion of the display area 2610; 4310; and a second portion 431b which extends from the first portion 431a along a movement direction of the first housing 210; 310; 410 and at least a portion of which is bent, and the support structure 314; 433 may be disposed on the second portion 431b of the display panel 261; 361; 431.

In an embodiment, the same pattern may be formed on each of the plurality of lattice plates 4331; 7331; 8331.

In an embodiment, in the plurality of lattice plates 7331, along a longitudinal direction, a first area 7331a-1; 7331b-1 on which a pattern is formed; and a second area 7331a-2; 7331b-2 on which the pattern is not formed may be alternately formed, and the first area 7331a-1; 7331b-1 of one lattice plate 7331a; 7331b among the plurality of lattice plates 7331 may overlap with the second area 7331a-2; 7331b-2 of the other lattice plate 7331b; 7331a.

In an embodiment, a different pattern may be formed on each of the plurality of lattice plates 4331; 5331; 8331.

In an embodiment, a pattern with different spacing may be formed on each of the plurality of lattice plates 5331, and a tensile force may be applied to each of the plurality of lattice plates 5331 so that the pattern is expanded along the longitudinal direction of the plurality of lattice plates 5331.

In an embodiment, the plurality of lattice plates 5331 may be connected in an expanded state along the longitudinal direction so that a relatively smaller tensile force acts than other lattice plates 5331 as being closer to the display panel 261; 361; 431.

In an embodiment, at least one 6331-3 of the plurality of lattice plates 6331-1; 6331-2; 6331-3 may include a first pattern area A1 in which a first pattern P1 is formed; a second pattern area A2 in which a second pattern P2 different from the first pattern P1 is formed; and a non-pattern area A3 in which no pattern is formed.

In an embodiment, the support structure 314; 433 may further include one or more adhesive layers 4332 each applied between the plurality of lattice plates 4331; 5331; 7331; 8331 to adhere lattice plates adjacent to each other.

In an embodiment, the adhesive layers 4332 may include a first adhesive portion 4332a-1; and a second adhesive portion 4332a-2 disposed further from the display area 2610; 4310 than the first adhesive portion 4332a-1 based on the longitudinal direction of the display module 160; 430, and the second adhesive portion 4332a-2 may have stiffness smaller than stiffness of the first adhesive portion 4332a-1.

In an embodiment, the plurality of lattice plates 4331; 5331; 7331; 8331 may include, based on a thickness direction of the plurality of lattice plates 4331; 5331; 7331; 8331: a first lattice plate 4331a; 5331a; 7331a; 8331a stacked on the support plate 432; 532; a second lattice plate 4331b; 5331b; 7331b; 8331b stacked on the first lattice plate 4331a; 5331a; 7331a; 8331a so as to be opposite to the support plate 432; 532; and a third lattice plate 4331c; 5331c; 8331c stacked on the second lattice plate 4331b; 5331b; 7331b; 8331b so as to be opposite to the first lattice plate 4331a; 5331a; 7331a; 8331a.

In an embodiment, the support structure 314; 433 may include a first adhesive layer 4332a which is applied between the first lattice plate 4331a; 5331a; 7331a; 8331a and the second lattice plate 4331b; 5331b; 7331b; 8331b, and bonds the first lattice plate 4331a; 5331a; 7331a; 8331a and the second lattice plate 4331b; 5331b; 7331b; 8331b; and a second adhesive layer 4332b which is applied between the second lattice plate 4331b; 5331b; 7331b; 8331b and the third lattice plate 4331c; 5331c; 8331c, and bonds the second lattice plate 4331b; 5331b; 7331b; 8331b and the third lattice plate 4331c; 5331c; 8331c.

In an embodiment, the second adhesive layer 4332b may have stiffness smaller than stiffness of the first adhesive layer 4332a.

In an embodiment, the display module 160; 430 may further include an end bar 434 connected to an end portion of the support plate 432; 532; and a connecting member 370; 470 which moves the end bar 434 in response to a movement of the first housing 210; 310; 410 relative to the second housing 220; 320; 420, the electronic device 101; 201; 301; 401 may further include a guide rail 390; 490 connected to the second housing 220; 320; 420 and to which the end bar 434 is movably connected, and the connecting member 370; 470 may connect the first housing 210; 310; 410 and the end bar 434, and move the end bar 434 along the guide rail 390; 490 to expand or reduce the display area 2610; 4310 of the display module 160; 430.

In an embodiment, at least one lattice plate of the plurality of lattice plates 8331 may include a protrusion 83311 formed to protrude at a portion that comes into contact with the guide rail 390; 490.

In an embodiment, an electronic device 101; 201; 301; 401 may include a first housing 210; 310; 410; a second housing 220; 320; 420, to which the first housing 210; 310; 410 is connected to be inserted and withdrawn, a guide rail 390; 490 connected to the second housing 220; 320; 420; and a display module 160; 430 which is supported by at least one of the first housing 210; 310; 410 and the second housing 220; 320; 420, and has a display area 2610; 4310 that changes by a relative movement of the first housing 210; 310; 410 with respect to the second housing 220; 320; 420, and the display module 160; 430 may include a display panel 261; 361; 431; a support plate 432; 532 disposed on a rear surface of the display panel 261; 361; 431; a support structure 314; 433 including a plurality of lattice plates 4331; 5331; 7331; 8331 disposed on the support plate 432; 532 to be opposite to the display panel 261; 361; 431; an end bar 434 connected to an end portion of the support plate 432; 532 and movably connected to the guide rail 390; 490; and a connecting member 370; 470 which connects the first housing 210; 310; 410 and the end bar 434, moves the end bar 434 along the guide rail 390; 490 in response to the movement of the first housing 210; 310; 410 relative to the second housing 220; 320; 420, and expands or reduces the display area 2610; 4310 of the display module 160; 430.

In an embodiment, the support structure 314;433 may further include a non-patterned plate on which no pattern is formed.

In an embodiment, the guide rail 390; 490 may include a first guide portion 390a connected to the first housing 210; 310; 410; and a second guide portion 390b which is connected to the second housing 220; 320; 420 and to which the first guide portion 390a is movably connected.

In an embodiment, the support structure 314; 433 may further include one or more adhesive layers each applied between the plurality of lattice plates 4331; 5331; 7331; 8331 to adhere lattice plates adjacent to each other.

In an embodiment, an electronic device 101; 201; 301; 401 may include a first housing 210; 310; 410; a second housing 220; 320; 420, to which the first housing 210; 310; 410 is connected to be inserted and withdrawn, a pair of guide rails 390; 490 including a first guide portion 390a connected to the first housing 210; 310; 410 and a second guide portion 390b connected to the second housing 220; 320; 420; and a display module 160; 430 which is supported by at least one of the first housing 210; 310; 410 and the second housing 220; 320; 420, and has a display area 2610; 4310 that changes by a relative movement of the first housing 210; 310; 410 with respect to the second housing 220; 320; 420, and the display module 160; 430 may include a display panel 261; 361; 431; a support plate 432; 532 connected to a rear surface of the display panel 261; 361; 431; and, as a support structure 314; 433 including a plurality of lattice plates 4331; 5331; 7331; 8331 disposed on the support plate 432; 532 to be opposite to the display panel 261; 361; 431, the support structure 314; 433 including a first lattice plate 4331a; 5331a; 7331a; 8331a stacked on the support plate 432; 532 to be opposite to the display panel 261; 361; 431; a second lattice plate 4331b; 5331b; 7331b; 8331b stacked on the first lattice plate 4331a; 5331a; 7331a; 8331a to be opposite to the support plate 432; 532; a third lattice plate 4331c; 5331c; 8331c stacked on the second lattice plate 4331b; 5331b; 7331b; 8331b so as to be opposite to the first lattice plate 4331a; 5331a; 7331a; 8331a; a first adhesive layer 4332a which is applied between the first lattice plate 4331a; 5331a; 7331a; 8331a and the second lattice plate 4331b; 5331b; 7331b; 8331b, and bonds the first lattice plate 4331a; 5331a; 7331a; 8331a and the second lattice plate 4331b; 5331b; 7331b; 8331b; and a second adhesive layer 4332b which is applied between the second lattice plate 4331b; 5331b; 7331b; 8331b and the third lattice plate 4331c; 5331c; 8331c, and bonds the second lattice plate 4331b; 5331b; 7331b; 8331b and the third lattice plate 4331c; 5331c; 8331c.

## Claims

1. An electronic device (101; 201; 301; 401) comprising:
a first housing (210; 310; 410);
a second housing (220; 320; 420), to which the first housing (210; 310; 410) is movably connected; and
a display module (160; 430) which is supported by at least one of the first housing (210; 310; 410) and the second housing (220; 320; 420), and has a display area (2610; 4310) that changes by a relative movement of the first housing (210; 310; 410) with respect to the second housing (220; 320; 420),
wherein the display module (160; 430) comprises:
a display panel (261; 361; 431);
a support plate (432; 532) having one surface connected to a rear surface of the display panel (261; 361; 431); and
a support structure (314; 433) comprising a plurality of lattice plates (4331; 5331; 7331; 8331) disposed on the other surface of the support plate (432; 532) opposite to the one surface of the support plate (432; 532).

2. The electronic device of claim 1, wherein
the display panel (261; 361; 431) comprises:
a first portion (431a) which is supported by the first housing (210; 310; 410) and forms a portion of the display area (2610; 4310); and
a second portion (431b) which extends from the first portion (431a) along a movement direction of the first housing (210; 310; 410) and at least a portion of which is bent, and
the support structure (314; 433) is disposed on the second portion (431b) of the display panel (261; 361; 431).

3. The electronic device of claim 1 or 2, wherein the same pattern is formed on each of the plurality of lattice plates (4331; 7331; 8331).

4. The electronic device of any one of claims 1 to 3, wherein,
in the plurality of lattice plates (7331), along a longitudinal direction,
a first area (7331a-1; 7331b-1) on which a pattern is formed; and
a second area (7331a-2; 7331b-2) on which the pattern is not formed are alternately formed, and
the first area (7331a-1; 7331b-1) of one lattice plate (7331a; 7331b) among the plurality of lattice plates (7331) overlaps with the second area (7331a-2; 7331b-2) of the other lattice plate (7331b; 7331a).

5. The electronic device of any one of claims 1 to 4, wherein a different pattern is formed on each of the plurality of lattice plates (4331; 5331; 8331).

6. The electronic device of any one of claims 1 to 5, wherein
a pattern with different spacing is formed on each of the plurality of lattice plates (5331), and
a tensile force is applied to each of the plurality of lattice plates (5331) so that the pattern is expanded along the longitudinal direction of the plurality of lattice plates (5331).

7. The electronic device of any one of claims 1 to 6, wherein
the plurality of lattice plates (5331) are connected in an expanded state along the longitudinal direction so that a relatively smaller tensile force acts than other lattice plates (5331) as being closer to the display panel (261; 361; 431).

8. The electronic device of any one of claims 1 to 7, wherein
at least one (6331-3) of the plurality of lattice plates (6331-1; 6331-2; 6331-3) comprises:
a first pattern area (A1) in which a first pattern (P1) is formed;
a second pattern area (A2) in which a second pattern (P2) different from the first pattern (P1) is formed; and
a non-pattern area (A3) in which no pattern is formed.

9. The electronic device of any one of claims 1 to 8, wherein
the support structure (314; 433) further comprises one or more adhesive layers (4332) each applied between the plurality of lattice plates (4331; 5331; 7331; 8331) to adhere lattice plates adjacent to each other.

10. The electronic device of any one of claims 1 to 9, wherein
the adhesive layers (4332) comprise:
a first adhesive portion (4332a-1); and
a second adhesive portion (4332a-2) disposed further from the display area (2610; 4310) than the first adhesive portion (4332a-1) based on the longitudinal direction of the display module (160; 430), and
the second adhesive portion (4332a-2) has stiffness smaller than stiffness of the first adhesive portion (4332a-1).

11. The electronic device of any one of claims 1 to 10, wherein the plurality of lattice plates (4331; 5331; 7331; 8331) comprises, based on a thickness direction of the plurality of lattice plates (4331; 5331; 7331; 8331):
a first lattice plate (4331a; 5331a; 7331a; 8331a) stacked on the support plate (432; 532);
a second lattice plate (4331b; 5331b; 7331b; 8331b) stacked on the first lattice plate (4331a; 5331a; 7331a; 8331a) so as to be opposite to the support plate (432; 532); and
a third lattice plate (4331c; 5331c; 8331c) stacked on the second lattice plate (4331b; 5331b; 7331b; 8331b) so as to be opposite to the first lattice plate (4331a; 5331a; 7331a; 8331a).

12. The electronic device of any one of claims 1 to 11, wherein the support structure (314; 433) comprises:
a first adhesive layer (4332a) which is applied between the first lattice plate (4331a; 5331a; 7331a; 8331a) and the second lattice plate (4331b; 5331b; 7331b; 8331b), and bonds the first lattice plate (4331a; 5331a; 7331a; 8331a) and the second lattice plate (4331b; 5331b; 7331b; 8331b); and
a second adhesive layer (4332b) which is applied between the second lattice plate (4331b; 5331b; 7331b; 8331b) and the third lattice plate (4331c; 5331c; 8331c), and bonds the second lattice plate (4331b; 5331b; 7331b; 8331b) and the third lattice plate (4331c; 5331c; 8331c).

13. The electronic device of any one of claims 1 to 12, wherein the second adhesive layer (4332b) has stiffness smaller than stiffness of the first adhesive layer (4332a).

14. The electronic device of any one of claims 1 to 13, wherein
the display module (160; 430) further comprises:
an end bar (434) connected to an end portion of the support plate (432; 532); and
a connecting member (370; 470) which moves the end bar (434) in response to a movement of the first housing (210; 310; 410) relative to the second housing (220; 320; 420),
the electronic device (101; 201; 301; 401) further comprises a guide rail (390; 490) connected to the second housing (220; 320; 420) and to which the end bar (434) is movably connected, and
the connecting member (370; 470) connects the first housing (210; 310; 410) and the end bar (434), and moves the end bar (434) along the guide rail (390; 490) to expand or reduce the display area (2610; 4310) of the display module (160; 430).

15. The electronic device of any one of claims 1 to 14, wherein at least one lattice plate of the plurality of lattice plates (8331) comprises a protrusion (83311) formed to protrude at a portion that comes into contact with the guide rail (390; 490).
